# EUROPEAN PATENT SPECIFICATION

(11) **EP 0 978 917 B1**
(45) Date of publication and mention of the grant of the patent: **27.08.2003**
(21) Application number: 99202490.1
(22) Date of filing: 29.07.1999
(51) Int. Cl.: H02G 11/02, H01R 25/00

(54) **An electrical extension lead with a flexible cable wound on the outside of the insulating body**
Auf der Aussenseite eines Isolierkörpers gewickeltes flexibles Verlängerungskabel
Rallonge de câble électrique flexible enroulé sur l'extérieur d'un corps isolant

(30) Priority: 04.08.1998 IT MI980557 U
(43) Date of publication of application: 09.02.2000
(73) Proprietor: BTICINO S.p.A., 20154 Milano (IT)
(72) Inventor: Fabrizi, Fabrizio, 24100 Bergamo (IT)
(74) Representative: Maccalli, Marco

(56) References cited:
- DE-U- 8 410 482
- DE-U- 9 316 284
- FR-A- 2 384 700
- US-A- 3 290 453
- US-A- 4 520 239
- US-A- 4 685 634
- "Circuit protector hides in wall plug" MACHINE DESIGN, vol. 52, no. 5, 1980, page 70 XP002122156 Cleveland Ohio USA

## Description

The present invention relates to an electrical extension cable arrangement and, in particular, to an electrical extension cable arrangement according to the preamble to the first claim.

An electrical extension cable arrangement is commonly used for connecting an electrical device to a supply socket remote from the device. An electrical extension cable arrangement is constituted by a flexible cable terminating at one of its end in a plug for connecting the electrical extension cable to a supply socket. The other end of the flexible cable is housed in an insulating body in which one or more sockets are provided for the connection of the electrical device.

From DE-U-93 16 284 is known an electrical extension cable arrangement comprising an insulating body in which there is at least one socket for the connection of an electrical device and a flexible cable connected to the at least one socket and terminating in a plug for the connection of the electrical extension cable arrangement to a supply socket. The insulating body has a housing seat for manual winding of the flexible cable on the outside of the insulating body.

From US 4,685,634 and FR 2 384 700 are known electrical extension cable arrangements having a reel mechanism which enables the flexible cable to be wound up inside the insulating body so as to house the bulk of the electrical extension lead in a rest condition.

A disadvantage of these electrical extension cable arrangements is that both the moulds for producing the various components of the insulating body (including the reel mechanism) and the various steps for the assembly of these components are quite complex.

The document DE 3633844 A, which represents the closest prior art, describes a turning plate with central column for carrying electrical kitchen appliances. Said turning plate comprises two superimposed plates, wherein the upper plate is turnable with respect to the lower plate and a central column is placed in the centre of said upper plate. Sockets are formed in a vertical row on this central column and the lower plate has a system of grooves for winding an extension cable which is connected to the sockets of the central column. The electrical kitchen appliances can be put on the upper plate with their supply cables wound around the lower portion of the central column and their plugs inserted into the sockets of the column. Nevertheless, this type of extension lead is very bulky and therefore not suitable for limited space conditions.

Moreover, known electrical extension leads are impractical in operation because the reel mechanism is often subject to jamming, making the flexible cable difficult to wind up and unwind.

The object of the present invention is to prevent the above-mentioned disadvantages. To achieve this object, an electrical extension cable arrangement as defined in the characterising part of claim 1 is proposed.

Further embodiments and advantages of the electrical extension cable arrangement will become clear from the following description of a preferred embodiment thereof, given by way of non-limiting example with reference to the appended drawings, in which:

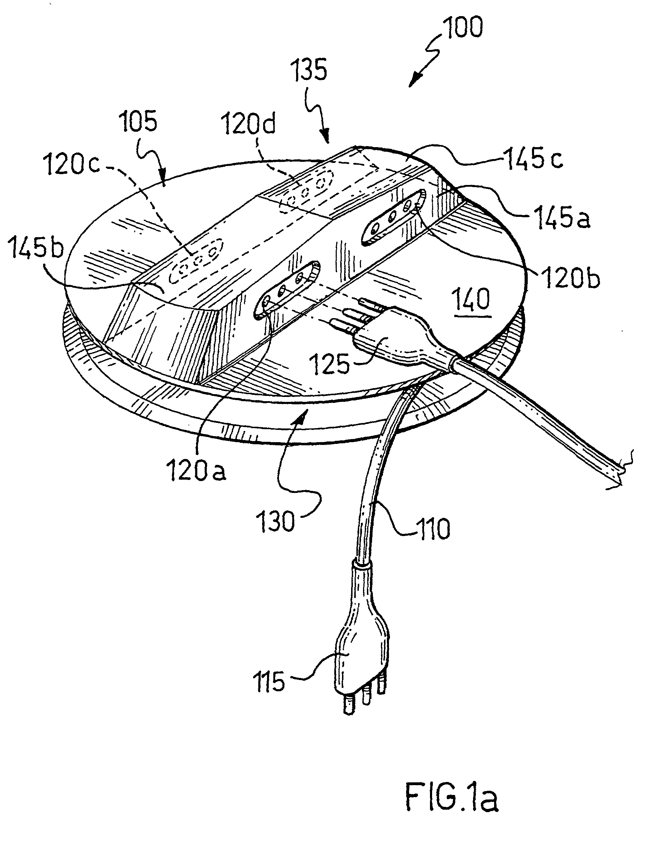

Figure 1a is a perspective view of an embodiment of the electrical extension cable arrangement of the present invention,

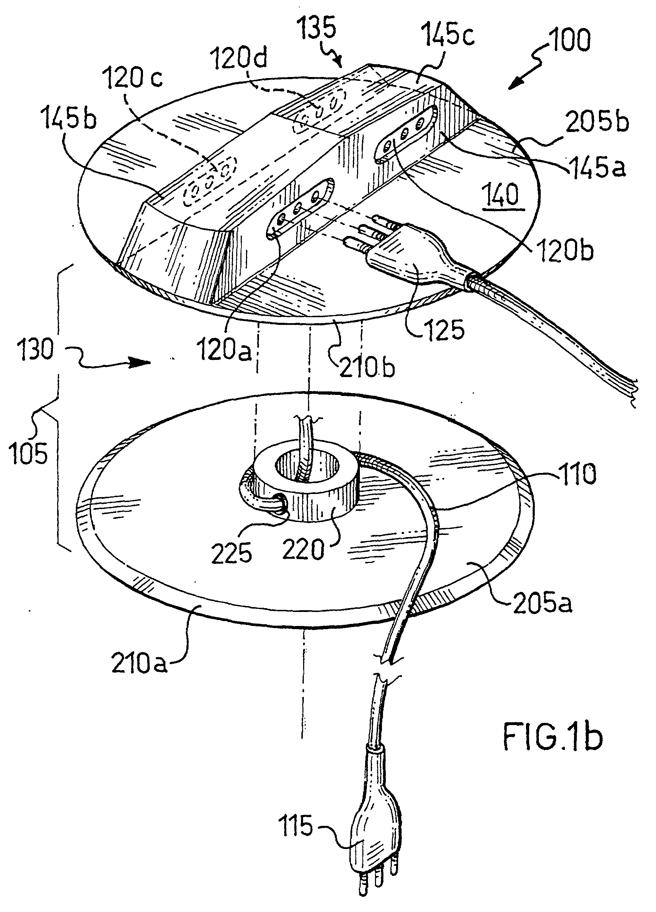

Figure 1b shows the electrical extension cable arrangement with parts separated.

With reference in particular to Figure 1a, this shows an electrical extension lead 100 comprising an insulating body 105 made, for example, of plastic material. A flexible cable 110, typically having a length of a few metres, extends from the insulating body 105 and terminates in a plug 115 which is used to connect the electrical extension lead 100 to a mains supply socket (not shown in the drawing).

In the insulating body 105 there are one or more sockets electrically connected to the flexible cable 110; in the embodiment illustrated in the drawing, there are four sockets (indicated 120a, 120b, 120c and 120d). An electrical device (not shown in the drawing), such as a domestic appliance, a drill, or the like, is connected to the electrical extension lead 100 by the insertion of a corresponding plug 125 in one of the sockets 120a-120d, for example, in the socket 120a.

The insulating body 105 preferably has a generally cylindrical structure. The height of the insulating body 105 is substantially less than its diameter; for example, the insulating body 105 has a height of 4 cm and a diameter of 17 cm. Around a lateral surface of the insulating body 105 there is a seat 130 for housing the flexible cable 110 (as described in detail below).

In a rest condition, the flexible cable 110 is wound around the insulating body 105 in the housing seat 130 so as to occupy a minimum amount of space. When the electrical extension lead is to be used, the flexible cable 110 is unwound and extracted from the housing seat 130 for sufficient length to cover a distance between the supply socket and the electrical device (or electrical devices). The electrical extension lead 100 is connected to the mains supply by inserting the plug 115 in the corresponding socket; the plug of each electrical device is then inserted in a socket of the electrical extension lead 100 (for example, the plug 125 is inserted in the socket 120a) so as to connect the electrical device to the mains supply by means of the flexible cable 110. Once use of the electrical extension lead 100 has finished, the plugs of the electrical devices are removed from the sockets of the electrical extension lead 100 and the plug 115 is removed from the supply socket; the flexible cable 110 is then wound manually around the insulating body 105 in the housing seat 130.

Similar considerations apply if the insulating body is of another shape (for example, a parallelepipedal shape), of different dimensions, if the housing seat is disposed in another position (for example, on top of the insulating body), etc. More generally, in the electrical extension lead according to the present invention, there is an insulating body having a housing seat for manual winding of the flexible cable on the outside of the insulating body.

The electrical extension lead of the present invention is extremely simple and can be mass-produced at low cost. The structure is particularly functional since it allows the flexible cable to be wound up quickly and easily.

Moreover, the fact that the flexible cable is arranged outside the insulating body facilitates heat-exchange with the air, preventing overheating of the electrical cable, for example, when high-powered electrical devices are used; in particular, this allows an unused portion of the flexible cable to be left wound up during use.

The electrical extension cable arrangement 100 has a grip element 135 which projects from an upper end surface 140 of the insulating body 105 (opposite a lower end surface used for supporting the electrical extension lead 100, for example, on a floor), and the grip element 135 extending along a diameter of the end surface 140.

The grip element 135 is extremely convenient when the electrical extension lead 100 is being placed on the floor or lifted from the floor; this grip element also facilitates operations to wind up and unwind the flexible cable, thus being particularly functional. Similar considerations apply if a handle, a pin-like element, or other equivalent grip elements are provided.

The grip element 135 has a front working surface 145a and a rear working surface 145b (parallel to one another) which extend perpendicularly upwards from the upper end surface 140. The working surfaces 145a, 145b are connected to one another by a faceted surface 145c. The sockets 120a, 120b and 120c, 120d are disposed, respectively, on the front working surface 145a and on the rear working surface 145b.

The above-described embodiment enables a large number of sockets (four sockets in the embodiment shown) to be accommodated on the insulating body whilst the electrical extension lead remains extremely compact. The plug of each electrical device is thus inserted in a socket of the electrical extension lead in a direction parallel to the surface of the upper end of the insulating body. This reduces the height of the electrical extension lead in use (with the electrical devices connected) enabling the electrical extension lead to be positioned, for example, under a bed, a sofa, or a cupboard. The plugs of the electrical devices are housed completely within the shape of the insulating body so as to be protected from accidental knocks. The electrical extension lead of the present invention may, however, also be formed with a different number of sockets (or even with only one socket), with the sockets positioned differently (for example, on only one working surface of the grip element, on the surface of the upper end of the insulating body), etc.

With reference now to Figure 1b (elements already shown in Figure 1a are identified by the same reference numerals) the insulating body 105 includes a lower plate 205a (used for supporting the electrical extension lead 100 on the floor) and an upper plate 205b, disposed on top of one another. The plates 205a, 205b have a generally flat structure; a chamfer 210a, 210b (for example at 45°) is preferably formed in the vicinity of an inner edge of each plate 205a, 205b (that is, an upper edge of the plate 205a and a lower edge of the plate 205b) so as to define a lead-in flare for the flexible cable 110.

A circular frame 220 extends upwardly from the centre of the lower plate 205a. A lateral surface of the frame 220 has a through-hole 225 in which an inner end of the flexible cable 110 is fitted, metal clips (not shown in the drawing), associated with the sockets 120a-120d, being electrically connected in parallel to the inner end of the cable. The upper plate 205b is connected to the lower plate 205a by means of the frame 220 so that the two plates 205a and 205b are spaced apart, for example, by a few centimetres. The space between the plates 205a and 205b defines the seat 130 for housing the flexible cable 110 which is wound around the frame 220.

The components of the above-described structure are particularly easy to produce and to assemble. Similar considerations apply if the plates have a different structure, or are not chamfered, if the frame is of another shape (for example, rectangular), or if an equivalent spacer element is interposed between the two plates, etc.

## Claims

1. An electrical extension cable arrangement (100) comprising
- an extension cable (110), terminating in a plug (115) for the connection of the electrical extension cable (110) to a supply socket;
- an insulating body (105),
wherein said insulating body (105) comprises
- a housing seat (130) adapted for winding the extension cable (110),
- one or more sockets (120a-120d), connected to the extension cable, for the connection of an electrical device,
- two external opposite end surfaces,
- a grip element (135) projecting from one end surface (140) of said end surfaces and having a first working surface (145a) and a second working surface (145b) perpendicular to said end surface (140),
**characterised in that** the grip element (135) extends along a diameter of said end surface (140) and said one or more sockets (120a-120d) are arranged on said first (145a) and/or second working surface (145b) in a single row directly proximate to said end surface (140).

2. An electrical extension cable arrangement (100) according to claim 1, in which the insulating body (105) has a generally cylindrical structure, the housing seat (130) being disposed around a lateral surface of the insulating body (105).

3. An electrical extension cable arrangement (100) according to claim 2, in which the height of the insulating body (105) is substantially less than the diameter of the insulating body (105).

4. An electrical extension cable arrangement (100) according to claim 3, in which the first working surface (145a) and the second working surface (145b) are parallel to one another and extend perpendicularly relative to the end surface (140).

5. An electrical extension cable arrangement (100) according to claim 4, in which the grip element (135) comprises a first socket (120a), a second socket (120b), a third socket (120c) and a fourth socket (120d), the first and second sockets (120a, 120b) being disposed on the first working surface (145a) and the third and fourth sockets (120c, 120d) being disposed on the second working surface (145b).

6. An electrical extension cable arrangement (100) according to any one of claims 2 to 5, in which the insulating body (105) includes a first plate (205a) and a second plate (205b) disposed on top of one another , and a spacer element (220) interposed between the first plate (205a) and the second plate (205b) in a manner such that the first plate (205a) and the second plate (205b) are spaced apart to define the housing seat (130), the flexible cable (110) being wound around the spacer element (220).

7. An electrical extension cable arrangement (100) according to claim 6, in which the spacer element is constituted by a circular frame (220) extending perpendicularly from the centre of a surface of the first plate (205a) facing the second plate (205b), a through-hole (225) being formed in a lateral surface of the circular frame (220) for housing an inner end of the flexible cable (110).

8. An electrical extension cable arrangement (100) according to claim 6 or claim 7, in which a chamfer (210a, 210b) is formed in the vicinity of an inner edge of the first plate (205a) and of the second plate (205b) to define a lead-in flare for the flexible cable (100).

9. An electrical extension cable arrangement (100) according to any of the preceding claims, in which the working surfaces (145a, 145b) are connected to one another by a faceted surface 145c, the extension of the working surfaces from the end surface (140) being greater in the centre then in the periphery of the arrangement.

## Patentansprüche

1. Eine Elektrisches-Verlängerungskabel-Anordnung (100), die folgende Merkmale aufweist:
- ein Verlängerungskabel (110), das in einem Stecker (115) für die Verbindung des elektrischen Verlängerungskabels (110) mit einer Versorgungsbuchse endet;
- einen isolierenden Körper (105), wobei der isolierende Körper (105) folgende Merkmale aufweist:
- einen Gehäusesitz (130), der zum Aufwickeln des Verlängerungskabels (110) ausgelegt ist,
- eine oder mehrere Buchsen (120a-120d), die mit dem Verlängerungskabel verbunden sind, zur Verbindung einer elektrischen Vorrichtung,
- zwei gegenüberliegende Endaußenoberflächen,
- ein Greifelement (135), das von einer Endoberfläche (140) der Endoberflächen vorsteht und eine erste Arbeitsoberfläche (145a) und eine zweite Arbeitsoberfläche (145b) aufweist, die zu der Endoberfläche (140) senkrecht sind,
**dadurch gekennzeichnet, daß** sich das Greifelement (135) entlang eines Durchmessers der Endoberfläche (140) erstreckt und die eine oder mehreren Buchsen (120a-120d) in unmittelbarer Nähe zu der Endoberfläche (140) in einer einzigen Reihe auf der ersten (145a) und/oder der zweiten Arbeitsoberfläche (145b) angeordnet sind.

2. Eine Elektrisches-Verlängerungskabel-Anordnung (100) gemäß Anspruch 1, bei der der isolierende Körper (105) eine allgemein zylindrische Struktur aufweist, wobei der Gehäusesitz (130) um eine laterale Oberfläche des isolierenden Körpers (105) herum angeordnet ist.

3. Eine Elektrisches-Verlängerungskabel-Anordnung (100) gemäß Anspruch 2, bei der die Höhe des isolierenden Körpers (105) wesentlich geringer ist als der Durchmesser des isolierenden Körpers (105).

4. Eine Elektrisches-Verlängerungskabel-Anordnung (100) gemäß Anspruch 3, bei der die erste Arbeitsoberfläche (145a) und die zweite Arbeitsoberfläche (145b) parallel zueinander sind und sich relativ zu der Endoberfläche (140) senkrecht erstrecken.

5. Eine Elektrisches-Verlängerungskabel-Anordnung (100) gemäß Anspruch 4, bei der das Greifelement (135) eine erste Buchse (120a), eine zweite Buchse (120b), eine dritte Buchse (120c) und eine vierte Buchse (120d) aufweist, wobei die erste und die zweite Buchse (120a, 120b) auf der ersten Arbeitsoberfläche (145a) angeordnet sind und die dritte und die vierte Buchse (120c, 120d) auf der zweiten Arbeitsoberfläche (145b) angeordnet sind.

6. Eine Elektrisches-Verlängerungskabel-Anordnung (100) gemäß einem der Ansprüche 2 bis 5, bei der der isolierende Körper (105) eine erste Platte (205a) und eine zweite Platte (205b), die aufeinander angeordnet sind, und ein Abstandshalterelement (220) umfaßt, das derart zwischen der ersten Platte (205a) und der zweiten Platte (205b) angeordnet ist, daß die erste Platte (205a) und die zweite Platte (205b) voneinander beabstandet sind, um den Gehäusesitz (130) zu definieren, wobei das flexible Kabel (110) um das Abstandshalterelement (220) gewickelt ist.

7. Eine Elektrisches-Verlängerungskabel-Anordnung (100) gemäß Anspruch 6, bei der das Abstandshalterelement durch einen kreisförmigen Rahmen (220) gebildet ist, der sich von der Mitte einer Oberfläche der ersten Platte (205a), die der zweiten Platte (205b) zugewandt ist, senkrecht erstreckt, wobei in einer lateralen Oberfläche des kreisförmigen Rahmens (220) ein Durchgangsloch (225) zum Beherbergen eines inneren Endes des flexiblen Kabels (110) gebildet ist.

8. Eine Elektrisches-Verlängerungskabel-Anordnung (100) gemäß Anspruch 6 oder 7, bei der eine Fase (210a, 210b) in der Nähe einer inneren Kante der ersten Platte (205a) und der zweiten Platte (205b) gebildet ist, um eine Zuleitungsaufweitung für das flexible Kabel (100) zu definieren.

9. Eine Elektrisches-Verlängerungskabel-Anordnung (100) gemäß einem der vorhergehenden Ansprüche, bei der die Arbeitsoberflächen (145a, 145b) durch eine facettierte Oberfläche (145c) miteinander verbunden sind, wobei die Verlängerung der Arbeitsoberflächen von der Endoberfläche (140) in der Mitte größer ist als an der Peripherie der Anordnung.

## Revendications

1. Agencement (100) de câble électrique prolongateur, comprenant
- un câble prolongateur (110) se terminant en une fiche (115) destinée à la connexion d'un câble électrique prolongateur (110) avec une prise d'alimentation ;
- un corps isolant (105),
dans lequel ledit corps isolant (105) comprend
- une surface d'appui (130) formant logement adaptée à l'enroulement du câble prolongateur (110),
- une ou plusieurs prises (120a à 120d), connectées au câble prolongateur, destinées à la connexion d'un dispositif électrique,
- deux surfaces extérieures opposées d'extrémité,
- un élément (135) de saisie faisant saillie d'une surface (140) d'extrémité desdites surfaces d'extrémité et comportant une première surface (145a) de travail et une seconde surface (145b) de travail perpendiculaires à ladite surface (140) d'extrémité,
**caractérisé en ce que** l'élément (135) de saisie s'étend le long d'un diamètre de ladite surface (140) d'extrémité, et **en ce que** la ou lesdites plusieurs prises (120a à 120d) sont agencées sur lesdites première (145a) et/ou seconde (145b) surfaces de travail en une seule rangée à proximité immédiate de ladite surface (140) d'extrémité.

2. Agencement (100) de câble électrique prolongateur selon la revendication 1, dans lequel le corps isolant (105) a une structure globalement cylindrique, la surface d'appui (130) formant logement étant disposée autour d'une surface latérale du corps isolant (105).

3. Agencement (100) de câble électrique prolongateur selon la revendication 2, dans lequel la hauteur du corps isolant (105) est sensiblement inférieure au diamètre du corps isolant (105).

4. Agencement (100) de câble électrique prolongateur selon la revendication 3, dans lequel la première surface (145a) de travail et la seconde surface (145b) de travail sont parallèles l'une à l'autre et s'étendent perpendiculairement par rapport à la surface (140) d'extrémité.

5. Agencement (100) de câble électrique prolongateur selon la revendication 4, dans lequel l'élément (135) de saisie comprend une première prise (120a), une deuxième prise (120b), une troisième prise (120c) et une quatrième prise (120d), les première et deuxième prises (120a, 120b) étant disposées sur la première surface (145a) de travail, et les troisième et quatrième prises (120c, 120d) étant disposées sur la seconde surface (145b) de travail.

6. Agencement (100) de câble électrique prolongateur selon l'une quelconque des revendications 2 à 5, dans lequel le corps isolant (105) inclut une première plaque (205a) et une seconde plaque (205b) disposées l'une sur l'autre et un élément (220) formant écarteur interposé entre la première plaque (205a) et la seconde plaque (205b), de sorte que la première plaque (205a) et la seconde plaque (205b) sont espacées pour définir la surface d'appui (130) formant logement, le câble souple (110) étant enroulé autour de l'élément (220) formant écarteur.

7. Agencement (100) de câble électrique prolongateur selon la revendication 6, dans lequel l'élément formant écarteur est constitué d'un bâti circulaire (220) s'étendant perpendiculairement à partir du centre d'une surface de la première plaque (205a) faisant face à la seconde plaque (205b), un trou traversant (225) étant formé dans une surface latérale du bâti circulaire (220) pour logement d'une extrémité intérieure du câble souple (110).

8. Agencement (100) de câble électrique prolongateur selon la revendication 6 ou la revendication 7, dans lequel un chanfrein (210a, 210b) est formé à proximité d'un bord intérieur de la première plaque (205a) et de la seconde plaque (205b) pour définir un évasement d'entrée du câble souple (110).

9. Agencement (100) de câble électrique prolongateur selon l'une quelconque des revendications précédentes, dans lequel les surfaces (145a, 145b) de travail sont reliées l'une à l'autre par une surface à facettes (145c), l'étendue des surfaces de travail de la surface (140) d'extrémité étant plus grande au centre qu'à la périphérie de l'agencement.
